# EUROPÄISCHE PATENTSCHRIFT

(11) **EP 1 288 546 B1**
(45) Veröffentlichungstag und Bekanntmachung des Hinweises auf die Patenterteilung: **07.01.2004**
(21) Anmeldenummer: 02018539.3
(22) Anmeldetag: 17.08.2002
(51) Int. Cl.: F16K 27/04

(54) **Ventil**
Valve
Soupape

(30) Priorität: 29.08.2001 DE 10141469
(43) Veröffentlichungstag der Anmeldung: 05.03.2003
(73) Patentinhaber: Grohe Water Technology AG & Co. KG, 58675 Hemer (DE)
(72) Erfinder: Gebhardt, Wolfgang, 58706 Menden (DE); Ernst, Heinz, 58710 Menden (DE)

(56) Entgegenhaltungen:
- DE-A- 3 508 893
- DE-A- 3 623 669
- DE-A- 19 913 214
- FR-A- 2 485 682
- US-A- 4 653 535

## Beschreibung

Die Erfindung betrifft ein Ventil, insbesondere Einhebelmischventil, mit wenigstens zwei zueinander verschiebbaren Scheiben, von denen wenigstens eine der Scheiben eine oder mehrere Durchtrittsöffnungen aufweist, und die Scheiben zusammen mit den zugehörigen Dicht- und Gleitelementen in einem, aus einem Boden oder einer ortsfest gehaltenen Scheibe und einer Kapsel gebildeten, Öffnungen für den Zu- und Abfluss und ein Ventilstellglied enthaltenden Gehäuse angeordnet sind, so dass das Gehäuse mit den Ventilelementen als Ventilkartusche mit einem Armaturenkörper verbindbar ist, wobei die Kapsel mit einer zum Boden und/oder zu der ortsfest gehaltenen Scheibe abgekehrten, auf das Einbaumaß nacharbeitbaren Stirnseite versehen ist, an der ein Ringelement zur Befestigung der Ventilkartusche am Armaturenkörper anliegt.
Ein derartiges Ventil ist aus der Druckschrift DE 199 13 214 A1 bekannt. Diese Ventilausbildung erfordert in dem Aufnahmeraum für die Ventilkartusche eine mit einem bestimmten Abstand zum Grund des Aufnahmeraums am Armaturenkörper angeformte Kammerschulter, die eine Auflagefläche für eine Gewinderingmutter hat. Außerdem ist für die Nacharbeit der Ventilkartusche auf das Einbaumaß eine weitere, mit Fertigungstoleranzen behaftete Vorrichtung erforderlich.

Der Erfindung liegt die Aufgabe zugrunde, das im Oberbegriff des Anspruchs 1 angegebene Ventil zu verbessern und so auszubilden, dass die am Armaturenkörper in dem Aufnahmeraum angeformte Kammerschulter entfallen kann.

Diese Aufgabe wird nach der Erfindung bei einem gattungsgemäßen Ventil dadurch gelöst, dass die Kapsel in einem zur Kapsel axial verschiebbaren, mit einem Längsschlitz versehenen metallenen Stützring eingebettet ist, wobei die Länge des Stützrings das Einbaumaß bestimmt.
Weitere Ausgestaltungen der Erfindung sind in den Ansprüchen 2 bis 10 angegeben.

Die mit der Erfindung erzielbaren Vorteile bestehen insbesondere darin, dass der Aufnahmeraum für die Ventilkartusche einfacher und kostengünstiger herstellbar ist, da die mit einer relativ engen Fertigungstoleranz behaftete Ringschulter entfallen kann. Außerdem ermöglicht die erfindungsgemäße Ausbildung, dass beim Nacharbeiten der Kapsel das Einbaumaß durch die Länge des Stützrings vorgegeben wird, so dass ein nahezu frei von Fertigungstoleranzen erstellbare Ventilkartusche ermöglicht wird.

Darüber hinaus kann der geschlitzte Stützring so ausgebildet sein, dass die Kapsel mit ihrem im Durchmesser zylindrischen Bereich saugend oder eine leichte Aufweitung verursachend in den Stützring einschiebbar ist, so dass die Kapsel auch radial von dem Stützring aufgenommen wird.

In weiterer Ausgestaltung der Erfindung kann der Stützring günstig aus einem vorzugsweise nichtrostenden Stahlband durch einen Biegevorgang hergestellt werden. Selbstverständlich kann der Stützring aber auch aus Blech durch einen Stanzvorgang erzeugt werden.

Ein Ausführungsbeispiel der Erfindung ist in der Zeichnung dargestellt und wird im Folgenden näher beschrieben. In der Zeichnung zeigt
- Figur 1: ein zum Teil dargestelltes Einhebelmischventil mit einer einmontierten Ventilkartusche im Längsschnitt;
- Figur 2: einen in Figur 1 eingekreisten Bereich II in vergrößerter Darstellung;
- Figur 3: die in Figur 1 gezeigte Ventilkartusche mit angepasster Einbaulänge;
- Figur 4: die in Figur 3 gezeigte Ventilkartusche vor dem Anpassen an die Einbaulänge;

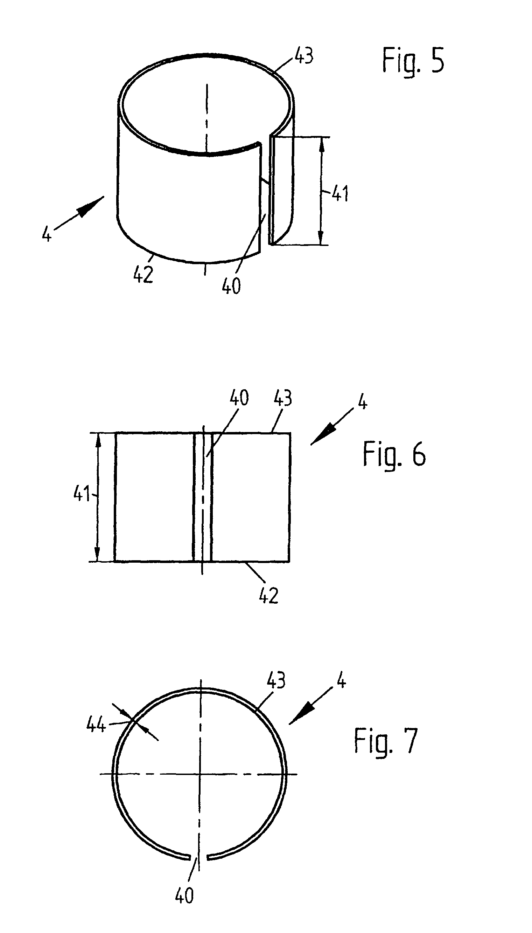

- Figur 5: den in Figur 1 gezeigten Stützring in verkleinerter Darstellung in perspektivischer Ansicht;
- Figur 6: den in Figur 5 gezeigten Stützring in der Seitenansicht;
- Figur 7: den in Figur 6 gezeigten Stützring in Draufsicht.

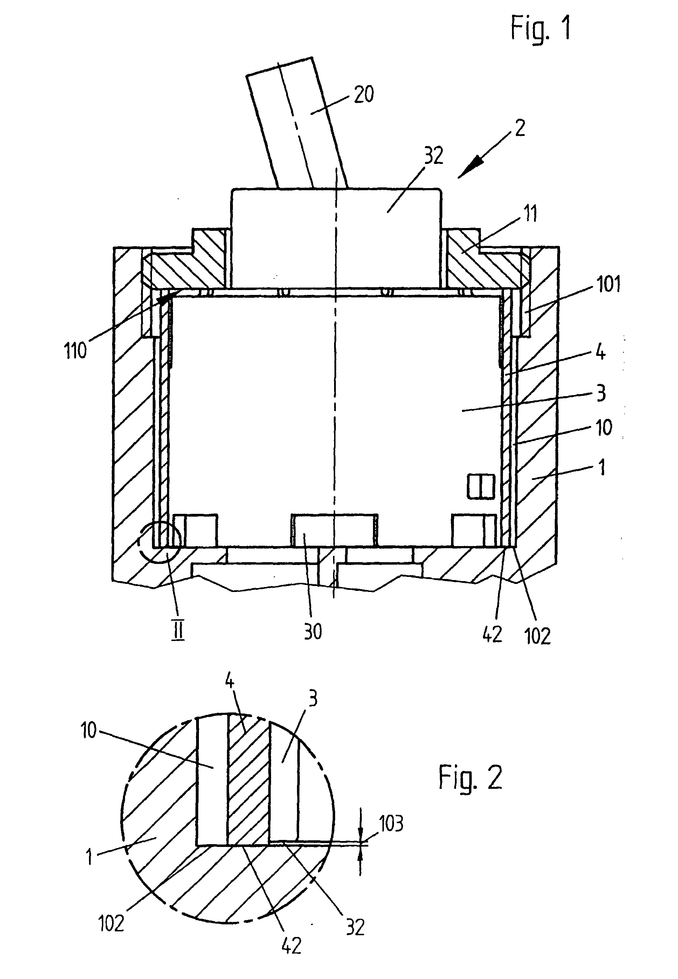

In Figur 1 der Zeichnung ist ein Armaturenkörper 1 des Einhebelmischventils nur zum Teil dargestellt. In einem Aufnahmeraum 10 des Armaturenkörpers 1 ist eine Ventilkartusche 2 vorgesehen, die mit einem Ringelement 11 gegen eine Grundfläche 102 des Aufnahmeraums 10 verspannt ist. Das Ringelement 11 ist dabei mittels Gewinde 101 in dem Aufnahmeraum 10 gehalten.

Die Ventilkartusche 2 besteht aus einer etwa zylindrischen Kapsel 3 aus Kunststoffwerkstoff, die einerseits mit einem Halsteil 32 aus dem Ringelement 11 vorsteht und andererseits mit einem Boden 30 verschlossen ist. Am zylindrischen Außenmantel der Kapsel 3 ist ein metallener Stützring 4 angeordnet. Der Stützring 4 weist einen Längsschlitz 40 auf, wobei der Stützring 4 so geformt ist, dass er beim axialen Einschieben der Kapsel 3 geringfügig Feder elastisch aufgeweitet wird, so dass die zylindrische Seitenwandung der Kapsel 3 radial vom Stützring 4 abgestützt wird. Außerdem wird hiermit erreicht, dass der Stützring 4 in der jeweiligen axialen Stecklage verharrt und nur durch eine zusätzliche axiale Krafteinwirkung zu der Kapsel 3 verschiebbar ist. Ein unbeabsichtigtes Lösen des Stützrings 4 von der Kapsel 3 wird damit im Wesentlichen ausgeschlossen.

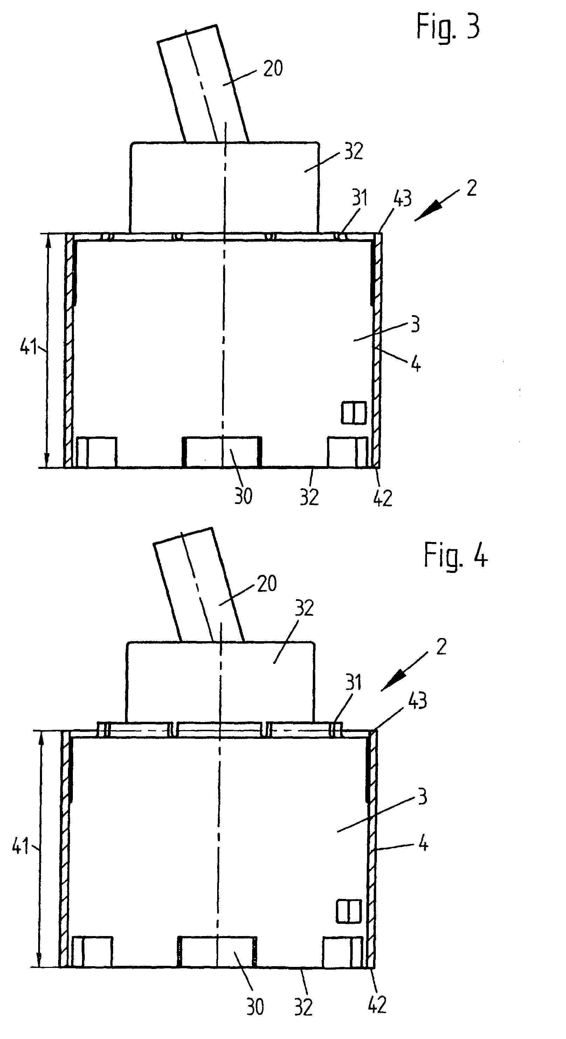

In der Kapsel 3 ist in bekannter Weise auf dem Boden 30 aufliegend eine Ventilsitzscheibe mit Durchtrittsöffnungen für das zufließende Kalt- und Warmwasser und eine Auslassöffnung für das in der Ventilkartusche 2 erzeugte Mischwasser angeordnet. An der Ventilsitzscheibe anliegend, ist eine entsprechende Steuerscheibe vorgesehen, die mit Hilfe eines aus dem Halsteil 32 herausgeführten Ventilstellglieds 20 relativ zu der Ventilsitzscheibe bewegbar ist. Die Steuerscheibe ist dabei so ausgebildet, dass mit einer Drehbewegung des Ventilstellglieds 20 das Mischungsverhältnis des zufließenden Kalt- und Warmwassers und mit einer Schwenkbewegung die Gesamtdurchflussmenge durch die Ventilkartusche 2 einstellbar ist.
Die vorstehend beschriebenen Ventilelemente sind insgesamt bekannt und werden von der Kapsel 3 zusammen mit den zugehörigen Dicht- und Gleitelementen zu einer Baueinheit zusammengefasst. Da die einzelnen Ventilelemente unvermeidlich mit Fertigungstoleranzen hergestellt werden, weist das von den Ventilelementen gebildete individuelle Paket eine unterschiedliche Größe auf, so dass an dem von dem Boden 30 abgekehrten Stirnseite eine nacharbeitbare Stirnseite 31 in Form eines radial vorstehenden umlaufenden Ringwulstes vorgesehen ist.
Nach dem Zusammenfügen der Ventilelemente wird das Elementpaket in die Kapsel 3 eingeschoben und mit dem Boden 30 verschlossen. Sodann wird der Stützring 4 auf den zylindrischen Bereich des Außenmantels der Kapsel 3 aufgeschoben. In diesem Zustand, wie er in Figur 4 gezeigt ist, kann nun die Kapsel 3 an der Stirnseite 31 auf die Länge des Stützrings 4 nachgearbeitet werden. Diese Nacharbeitung kann durch einen Abschmelzvorgang an der Stirnseite 31 der aus Kunststoff hergestellten Kapsel erfolgen. Alternativ kann beispielsweise auch eine zerspanende Nacharbeit an der Stirnseite 31 vorgenommen werden. Bei dieser Nacharbeitung der Stirnseite 31 auf die Länge des Stützrings 4 sind die Ventilscheiben und Dichtelemente in der Kapsel 3 mit der entsprechenden Vorspannung versehen, so dass die erforderliche Leichtgängigkeit der Ventilscheiben gewährleistet ist. Hiernach ist die Ventilkartusche 2, wie sie in Figur 3 dargestellt ist, für den Einbau in verschiedenen Einhebelmischern bereit.
Die Ventilkartusche 2 wird dabei als Baueinheit in den Aufnahmeraum 10 eingeführt. Im Boden 30 sind Schlauchdichtungen angeordnet, die die Verbindung zwischen den im Armaturenkörper 1 ausgebildeten Zulaufkanälen für Kalt- und Warmwasser und dem Auslasskanal sowie den entsprechenden Öffnungen in der Ventilsitzscheibe in der Kapsel 3 herstellen. Danach wird das Ringelement 11 in das Gewinde 101 eingeschraubt. An dem Ringelement 11 ist eine der Stirnseite 31 zugekehrte ebene Stirnseite 110 vorgesehen. Diese Stirnseite dient sowohl der nacharbeitbaren Stirnseite 31 der Kapsel 3 als auch der vorstehenden Stirnseite 43 des Stützrings 4 als Anlagefläche. Die Kapsel 3 kann hierbei, bedingt durch das von der Länge 41 des Stützrings 4 vorgegebene Einbaumaß, nur soweit in Richtung auf die Grundfläche 102 verspannt werden bis die erforderliche Vorspannung der Ventilelemente erreicht ist. Da in dieser Position einerseits die Stirnseite 42 an der Grundfläche 102 aufliegt und andererseits die gegenüberliegende Stirnseite 43 an der Stirnseite 110 des Ringelements 11 anliegt. Ein weiteres Verspannen der Kapsel 3 wird somit sicher ausgeschlossen, so dass bei der Einmontage in den Armaturenkörper 1 immer die entsprechende Vorspannung der Ventilelemente gewährleistet wird. Die Kapsel 3 ist hierbei so bemessen, dass an der der Oberfläche 102 zugekehrten Stirnseite 32 ein Abstand 103 verbleibt.

Der Stützring 4 kann aus nichtrostendem Stahlblech durch ein Stanzverfahren hergestellt werden. Alternativ kann der Stützring 4 auch mit großem Vorteil von einem elastisch federnden Bandmaterial hergestellt werden, wobei dann zunächst von dem Bandmaterial die dem Umfang des Stützrings 4 entsprechenden Stücke abzulängen und die Stücke anschließend durch einen Biegevorgang in die zylindrische Mantelform zu bringen sind.

Der Stützring 4 erfordert eine Wanddicke 44 von etwa 0,8 mm bis etwa 1,6 mm, um die Axialkräfte sicher aufnehmen zu können.

Bei dem vorstehenden Ausführungsbeispiel ist das Ringelement 11 als Ringmutter ausgebildet. Selbstverständlich kann als Ringelement auch eine Befestigungsscheibe an der nacharbeitbaren Stirnseite der ventilkartusche 2 vorgesehen werden, die mit wenigstens zwei Schrauben an dem Armaturenkörper befestigbar ist. Außerdem kann die Ventilkartusche auch Ventilelemente eines Absperr- und Mengenregulierventils und/oder eines Umschaltventils enthalten.

## Patentansprüche

1. Ventil mit wenigstens zwei zueinander verschiebbaren Scheiben, von denen wenigstens eine der Scheiben eine oder mehrere Durchtrittsöffnungen aufweist, und die Scheiben zusammen mit den zugehörigen Dichtund Gleitelementen in einem, aus einem Boden (30) oder einer ortsfest gehaltenen Scheibe und einer Kapsel (3) gebildeten, Öffnungen für den Zu- und Abfluss und ein Ventilstellglied enthaltenden Gehäuse angeordnet sind, so dass das Gehäuse mit den Ventilelementen als Ventilkartusche (2) mit einem Armaturenkörper (1) verbindbar ist, wobei die Kapsel (3) mit einer zum Boden (30) und/oder zu der ortsfest gehaltenen Scheibe abgekehrten, auf das Einbaumaß nacharbeitbaren Stirnseite (31) versehen ist, an der ein Ringelement (11) zur Befestigung der Ventilkartusche (2) am Armaturenkörper (1) anliegt, **dadurch gekennzeichnet, dass** die Kapsel (3) in einem zur Kapsel (3) axial verschiebbaren, mit einem Längsschlitz (40) versehenen metallenen Stützring (4) eingebettet ist, wobei die Länge (41) des Stützrings (4) das Einbaumaß bestimmt.

2. Ventil nach Anspruch 1, **dadurch gekennzeichnet, dass** die Kapsel (3) der Länge (41) des Stützrings (4) an der nacharbeitbaren Stirnseite (31) angepasst ist und dass in der Einbaulage der Stützring (4) mit der einen Stirnseite (42) am Armaturenkörper (1) abgestützt ist, während an der gegenüberliegenden Stirnseite (43) ein am Armaturenkörper (1) befestigbares Ringelement (11) vorgesehen ist, das mit einer ebenen Stirnseite (110) sowohl an der nacharbeitbaren Stirnseite (31) der Kapsel (3) als auch an der Stirnseite (43) des Stützrings (4) anliegt.

3. Ventil nach Anspruch 1 oder 2, **dadurch gekennzeichnet, dass** der Stützring (4) aus Blech gestanzt ist.

4. Ventil nach Anspruch 1 oder 2, **dadurch gekennzeichnet, dass** der Stützring (4) aus Bandmaterial hergestellt ist.

5. Ventil nach Anspruch 4, **dadurch gekennzeichnet, dass** der Stützring (4) aus elastisch federndem Bandmaterial besteht und durch einen Biegevorgang hergestellt ist.

6. Ventil nach wenigstens einem der vorhergehenden Ansprüche, **dadurch gekennzeichnet, dass** der Stützring (4) Feder elastisch aufgeweitet auf einem zylindrischen Bereich der Kapsel (3) angeordnet ist, so dass er in der axialen Stecklage verharrt und nur durch eine zusätzliche axiale Krafteinlenkung zur Kapsel (3) verschiebbar ist.

7. Ventil nach wenigstens einem der vorhergehenden Ansprüche, **dadurch gekennzeichnet, dass** der Stützring (4) eine Wanddicke (44) von etwa 0,8 mm bis 1,6 mm hat.

8. Ventil nach wenigstens einem der vorhergehenden Ansprüche, **dadurch gekennzeichnet, dass** das Ringelement (11) eine mittels Gewinde (101) am Armaturenkörper (1) gehaltene Ringmutter ist.

9. Ventil nach wenigstens einem der Ansprüche 1 bis 7, **dadurch gekennzeichnet, dass** als Ringelement eine Befestigungsscheibe vorgesehen ist, die mit wenigstens zwei Schrauben an dem Armaturenkörper befestigbar ist.

10. Ventil nach wenigstens einem der vorhergehenden Ansprüche, **dadurch gekennzeichnet, dass** der Stützring (4) aus nichtrostendem Stahl hergestellt ist.

## Claims

1. Valve having at least two discs displaceable with respect to one another, of which at least one of the discs has one or more through-openings, and the discs are arranged, together with the associated sealing and sliding elements, in a housing comprising a base (30), or a fixedly held disc, and an enclosure (3) and containing openings for inflow and outflow and a valve actuator, so that the housing with the valve elements is connectible as a valve cartridge (2) to the body of a fitting (1), the enclosure (3) being provided with an end face (31) that is remote from the base (30) and/or from the fixedly held disc and is subsequently machinable to the assembly dimension, on which end face there is located an annular element (11) for fixing the valve cartridge (2) to the fitting body (1), **characterised in that** the enclosure (3) is embedded in a metal supporting ring (4) provided with a longitudinal slit (40) and axially displaceable with respect to the enclosure (3), the length (41) of the supporting ring (4) determining the assembly dimension.

2. Valve according to claim 1, **characterised in that** the enclosure (3) is matched to the length (41) of the supporting ring (4) at the subsequently machinable end face (31), and **in that**, in the mounted position, the supporting ring (4) is supported with one end face (42) on the fitting body (1), whilst at the opposite end face (43) there is provided an annular element (11) fixable to the fitting body (1), which annular element abuts with a flat end face (110) both the subsequently machinable end face (31) of the enclosure (3) and the end face (43) of the supporting ring (4).

3. Valve according to claim 1 or 2, **characterised in that** the supporting ring (4) is stamped from sheet metal.

4. Valve according to claim 1 or 2, **characterised in that** the supporting ring (4) is made from strip stock.

5. Valve according to claim 4, **characterised in that** the supporting ring (4) consists of resilient strip stock and is produced by a bending process.

6. Valve according to at least one of the preceding claims, **characterised in that** the supporting ring is arranged, resiliently expanded, on a cylindrical region of the enclosure (3), so that it stays in the axial mounted position and is displaceable relative to the enclosure (3) only by an application of additional axial force.

7. Valve according to at least one of the preceding claims, **characterised in that** the supporting ring (4) has a wall thickness (44) of about 0.8 mm to 1.6 mm.

8. Valve according to at least one of the preceding claims, **characterised in that** the annular element (11) is an annular nut retained on the fitting body (1) by means of a screw thread (101).

9. Valve according to at least one of claims 1 to 7, **characterised in that** as annular element there is provided a fixing disc, which is fastenable by means of at least two screws to the fitting body.

10. Valve according to at least one of the preceding claims, **characterised in that** the supporting ring (4) is manufactured from stainless steel.

## Revendications

1. Vanne comportant au moins deux disques coulissant l'un par rapport à l'autre dont au moins l'un comporte un ou plusieurs orifices de passage, et logés avec leurs éléments d'étanchéité et de glissement dans un boîtier formé d'un fond (30) ou d'un disque tenu fixe et d'une capsule (3) avec des orifices pour l'arrivée et la sortie de liquide et un organe d'actionnement de vanne de façon que le boîtier avec les éléments de vanne puissent être reliés comme cartouche de vanne (2) à un corps de robinet (1),
la capsule (3) étant munie d'une face frontale (31) usinée selon les dimensions de montage, à l'opposé du fond (30) et/ou du disque tenu fixe, face frontale contre laquelle s'applique un élément annulaire (11) pour la fixation de la cartouche (2) contre le corps de robinet (1),
**caractérisée en ce que**
la capsule (3) est intégrée à un anneau d'appui (4), métallique muni d'une fente longitudinale (40), cet anneau pouvant coulisser axialement par rapport à la capsule (3),
la longueur (41) de l'anneau d'appui (4) déterminant la dimension de montage.

2. Vanne selon la revendication 1,
**caractérisée en ce que**
la capsule (3) est adaptée à la longueur (41) de l'anneau d'appui (4) au niveau de la face frontale usinée (31), et
en position de montage, l'anneau d'appui (4) est appuyé avec la face frontale (42) contre le corps de robinet (1) alors qu'au niveau de la face frontale opposée (43), on a un élément annulaire (11) fixé au corps de robinet (1), cet élément s'appuyant à la fois contre la face frontale usinée (31) de la capsule (3) et contre la face frontale (43) de l'anneau d'appui (4).

3. Vanne selon la revendication 1 ou 2,
**caractérisée en ce que**
l'anneau d'appui (4) est en tôle emboutie.

4. Vanne selon la revendication 1 ou 2,
**caractérisée en ce que**
l'anneau d'appui (4) est fabriqué à partir d'une matière en ruban.

5. Vanne selon la revendication 4,
**caractérisée en ce que**
l'anneau d'appui est formé d'un matériau en ruban élastique à ressort et obtenu par une opération de cintrage.

6. Vanne selon au moins l'une des revendications précédentes,
**caractérisée en ce que**
l'anneau d'appui (4) est installé de façon ouverte élastiquement comme un ressort sur une zone cylindrique de la capsule (3) pour rester en position engagée axialement et pour qu'il ne puisse coulisser que par l'application d'une force axiale supplémentaire à la capsule (3).

7. Vanne selon l'une des revendications précédentes,
**caractérisée en ce que**
l'anneau d'appui (4) a une épaisseur de paroi (44) d'environ 0,8 mm jusqu'à 1,6 mm.

8. Vanne selon l'une des revendications précédentes,
**caractérisée en ce que**
l'élément annulaire (11) est un écrou annulaire tenu par un filetage (101) au corps de robinet (1).

9. Vanne selon au moins l'une des revendications 1 à 7,
**caractérisée en ce que**
l'élément annulaire est un disque de fixation relié par au moins deux vis au corps de robinet.

10. Vanne selon au moins l'une des revendications précédentes,
**caractérisée en ce que**
l'anneau d'appui (4) est en acier inoxydable.
